# EUROPEAN PATENT APPLICATION

(11) **EP 4 575 750 A1**
(43) Date of publication of application: **25.06.2025**
(21) Application number: 24221896.4
(22) Date of filing: 19.12.2024
(51) Int. Cl.: G06F 3/14, G09G 5/14, G09G 5/36

(54) **MULTI-SCREEN DISPLAY SYSTEM, INTELLIGENT CABIN AND VEHICLE**

(30) Priority: 19.12.2023 CN 202311755980
(71) Applicant: Nio Technology (Anhui) Co., Ltd, Hefei City, Anhui 230601 (CN)
(72) Inventor: WANG, Fukuan, AnTing Town, Jiading Shanghai (CN)
(74) Representative: Vossius & Partner Patentanwälte Rechtsanwälte mbB

(57) **Abstract**

The present application relates to the technical field of automobiles, and specifically provides a multi-screen display system, an intelligent cabin, and a vehicle, aiming at solving the problems of how to optimize the resource allocation of the multi-screen display system and how to safely handle occasional black screen phenomenon of the instrument center screen. For this purpose, the method of the present application includes: on the basis of the Hypervisor system of QNX+Android, building a dual graphics engine display architecture based on the LVGL engine and the native graphics engine of the Android operating system. By deploying the lightweight LVGL engine on the QNX operating system, not only software resource overhead and costs are reduced, but also the running load of the QNX real-time operating system is reduced, further improving timeliness and security. Moreover, adding a layer of keep alive page drawn by the LVGL engine of the QNX operating system to the instrument center screen can effectively prevent the black screen phenomenon of the instrument center screen caused by the Android operating system crashes, thus avoiding or alleviating user panic and anxiety, and further ensuring the driving safety and improving the user experience.

## Description

### FIELD OF THE INVENTION

The present application relates to the technical field of automobiles, and specifically provides a multi-screen display system, an intelligent cabin, and a vehicle.

### BACKGROUND OF THE INVENTION

An intelligent cabin is a brand new in-vehicle integrated digital platform on which multiple IT and artificial intelligence technologies are integrated, aiming at providing intelligent experiences for drivers and passengers and promoting driving safety. The intelligent cabin typically includes a multi-screen display system that supports simultaneous displaying of multiple display screens, with each of the display screens having its own emphasis on display information based on business division. For example, an instrument center screen is typically used to display in-vehicle entertainment information, while an instrument cluster is typically used to display basic driving information. However, in practical product applications, the instrument cluster not only displays the basic driving information, but also displays some in-vehicle entertainment information such as navigation and media.

For displaying the basic driving information on the instrument cluster, focus is mainly placed on the real-time performance and safety of the display system, and the requirements for display effect are not high; and for displaying the in-vehicle entertainment information on the instrument center screen, focus is placed on the powerful graphics and image processing capabilities of the display system. At the same time, the instrument center screen is not completely unrelated to safety. The occasional black screen problem of the instrument center screen during vehicle driving can also cause panic and anxiety to users, thereby affecting the driving safety. Therefore, how to optimize the resource allocation of the multi-screen display system to achieve cross display of different types of information on multiple screens and how to safely handle the occasional black screen problem of the instrument center screen have become urgent problems to be solved.

Accordingly, there is a need for a new solution in the art to solve the above problems.

### SUMMARY OF THE INVENTION

The present application aims to solve or partially solve the above technical problems, namely, how to optimize the resource allocation of the multi-screen display system to achieve cross display of different types of information on multiple screens and how to safely handle occasional black screen problem of the instrument center screen.

In a first aspect, the present application provides a multi-screen display system, which includes:
a first operating system, a second operating system, a first display screen, and a second display screen;
in which the first operating system is deployed with a first graphics engine and draws a first type of information based on the first graphics engine;
the second operating system is deployed with a second graphics engine and draws a second type of information based on the second graphics engine;
the first display screen includes a first display area and a second display area, which are two non-overlapping display areas or two overlapping display areas;
the second display screen includes a third display area and a fourth display area, which are two overlapping display areas;
the first display area and the third display area are configured to display the first type of information;
the second display area and the fourth display area are configured to display the second type of information; and
the first operating system is a real-time operating system, and the security of the first operating system is higher than that of the second operating system.

In an embodiment of the multi-screen display system described above, the system further includes:
a first graphics drawing process, a second graphics drawing process, a third graphics drawing process, and a fourth graphics drawing process;
in which the first graphics drawing process is configured to run on the first operating system, and draw the first type of information to generate first display data;
the second graphics drawing process is configured to run on the second operating system, and draw the second type of information to generate second display data;
the third graphics drawing process is configured to run on the first operating system, and draw the first type of information to generate third display data;
the fourth graphics drawing process is configured to run on the second operating system, and draw the second type of information to generate fourth display data;
both the first graphics drawing process and the third graphics drawing process are designed based on the first graphics engine, which is a lightweight graphics engine; and
both the second graphics drawing process and the fourth graphics drawing process are designed based on the second graphics engine.

In an embodiment of the multi-screen display system described above, the system further includes:
a first data channel, a second data channel, a third data channel, a fourth data channel, a first graphics synthesis module, and a second graphics synthesis module;
in which the first data channel is configured to transport the first display data to the first graphics synthesis module;
the second data channel is configured to transport the second display data to the second graphics synthesis module;
the third data channel is configured to transport the third display data to the first graphics synthesis module; and
the fourth data channel is configured to transport the fourth display data to the second graphics synthesis module.

In an embodiment of the multi-screen display system described above,
the first graphics synthesis module is configured to synthesize the first display data and the second display data based on hierarchical settings of the first data channel and the second data channel, as the display data of the first display screen;
in which the hierarchical setting of the second data channel is higher than that of the first data channel, and an image of the second display area corresponding to the second data channel is located above an image of the first display area corresponding to the first data channel;
the second graphics synthesis module is configured to synthesize the third display data and the fourth display data based on hierarchical settings of the third data channel and the fourth data channel, as the display data of the second display screen; and
the hierarchical setting of the fourth data channel is higher than that of the third data channel, and an image of the fourth display area corresponding to the fourth data channel is located above an image of the third display area corresponding to the third data channel.

In an embodiment of the multi-screen display system described above, the first operating system is further configured to execute the following operations:
monitoring the core process status of the second operating system in real time;
restarting the second operating system by the first operating system when the core process status is abnormal; and
setting the third display data as a keep alive page by the first operating system during the restart process of the second operating system, so that the second display screen displays the keep alive page.

In an embodiment of the multi-screen display system described above, the first operating system is deployed with a virtual machine controller, and the second operating system is deployed based on the virtual machine controller.

In an embodiment of the multi-screen display system described above, the first operating system is the QNX operating system, the virtual machine controller is the Hypervisor, and the second operating system is the Android operating system.

In an embodiment of the multi-screen display system described above, the first graphics engine is the LVGL engine.

In a second aspect, the present application provides an intelligent cabin, which includes the multi-screen display system as described in any one of the above embodiments.

In a third aspect, the present application provides a vehicle which includes the intelligent cabin, and the intelligent cabin includes the multi-screen display system as described in any one of the above embodiments.

On the basis of the Hypervisor system cabin architecture of QNX+Android, the present application builds a dual graphics engine display architecture based on the lightweight graphics engine LVGL engine and the native graphics engine of the Android operating system. The display architecture also generates images of different display areas of different display screens through multiple data channels and multiple graphics synthesis modules. By deploying the lightweight LVGL engine on QNX, not only software resource overhead and costs are reduced, but also the running load of the QNX real-time operating system is reduced, further improving timeliness and security. The native graphics engine of the Android operating system is not only responsible for the drawing of in-vehicle entertainment information on the instrument center screen, but also is responsible for the drawing of in-vehicle entertainment information on the instrument cluster, which can achieve a certain degree of reuse in data and SDK, thus saving system resources. Moreover, adding a layer of keep alive page drawn by the LVGL engine of the QNX operating system to the instrument center screen can effectively prevent the black screen phenomenon of the instrument center screen caused by the Android operating system crashes, thus avoiding or alleviating user panic and anxiety, and further ensuring the driving safety and improving the user experience.

### BRIEF DESCRIPTION OF THE DRAWINGS

With reference to the accompanying drawings, the content disclosed in the present application will become easier to understand. It is easy for those skilled in the art to understand that these drawings are only for illustrative purpose, and are not intended to limit the scope of protection of the present application.
FIG. 1 is a schematic diagram of the architecture of the multi-screen display system according to an embodiment of the present application.
FIG. 2 is a schematic diagram of the deployment scheme of the first operating system and the second operating system in the embodiment of the present application.
FIG. 3 is a schematic diagram of another deployment scheme of the first operating system and the second operating system in the embodiment of the present application.
FIG. 4 is a schematic diagram of the architecture of the multi-screen display system for an intelligent cabin in the embodiment of the present application.
FIG. 5 is a schematic diagram of the method for dividing display areas of the instrument cluster and the instrument center screen in the embodiment of the present application.
FIG. 6 is a schematic diagram of the keep alive strategy of the instrument center screen in the embodiment of the present application.

### DETAILED DESCRIPTION OF THE EMBODIMENT(S) OF THE INVENTION

In order to make the objects, technical solutions and advantages of the embodiments of the present application clearer, the technical solutions of the embodiments of the present application will be described clearly and completely below with reference to the accompanying drawings. Obviously, the described embodiments are some of the embodiments of the present application, not all of them. Based on the embodiments of the present application, all the other embodiments obtained by those skilled in the art without creative efforts will fall within the scope of protection of the present application.

It should be understood by those skilled in the art that these embodiments are only used to explain the technical principles of the present application, and are not intended to limit the scope of protection of the present application. Those skilled in the art can make adjustments as needed to adapt to specific application scenes.

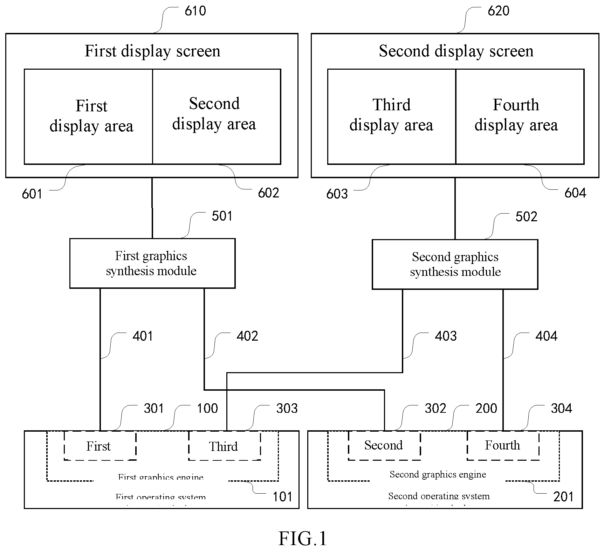

First, reference is made to FIG. 1, which is a schematic diagram of the architecture of the multi-screen display system according to an embodiment of the present application. The multi-screen display system includes a first operating system 100, a second operating system 200, a first display screen 610, and a second display screen 620.

A first graphics engine 101 is deployed on the first operating system 100, and the first operating system 100 draws a first type of information based on the first graphics engine 101.

Specifically, a first graphics drawing process 301 and a third graphics drawing process 303, which are designed and developed based on the first graphics engine 101, run on the first operating system 100. The first graphics drawing process 301 draws the first type of information to generate first display data. The third graphics drawing process 303 draws the first type of information to generate third display data.

A second graphics engine 201 is deployed on the second operating system 200, and the second operating system 200 draws a second type of information based on the second graphics engine 201.

Specifically, a second graphics drawing process 302 and a fourth graphics drawing process 304, which are designed and developed based on the second graphics engine 201, run on the second operating system 200. The second graphics drawing process 302 draws the second type of information to generate second display data. The fourth graphics drawing process 304 draws the second type of information to generate fourth display data.

Preferably, the first graphics drawing process 301, the second graphics drawing process 302, the third graphics drawing process 303, and the fourth graphics drawing process 304 are all designed as system processes.

A first data channel 401 obtains the first display data drawn by the first graphics drawing process 301 of the first operating system 100, and sends the first display data to a first graphics synthesis module 501.

A second data channel 402 obtains the second display data drawn by the second graphics drawing process 302 of the second operating system 200, and sends the second display data to the first graphics synthesis module 501.

A third data channel 403 obtains the third display data drawn by the third graphics drawing process 303 of the first operating system 100, and sends the third display data to a second graphics synthesis module 502.

A fourth data channel 404 obtains the fourth display data drawn by the fourth graphics drawing process 304 of the second operating system 200, and sends the fourth display data to the second graphics synthesis module 502.

The first data channel 401, the second data channel 402, the third data channel 403 and the fourth data channel 404 are configured to have different hierarchies; typically, the higher the hierarchy is, the higher the layer will be displayed on the display screen.

Preferably, the hierarchical setting of the second data channel 402 is higher than that of the first data channel 401, and the hierarchical setting of the fourth data channel 404 is higher than that of the third data channel 403.

The first graphics synthesis module 501 synthesizes the first display data and the second display data into the display data of the first display screen 610 based on the hierarchical settings of the first data channel 401 and the second data channel 402.

The first display screen 610 is divided into a first display area 601 and a second display area 602, which can be designed as two non-overlapping display areas or two overlapping display areas. The first display area 601 displays the image corresponding to the first display data, and the second display area 602 displays the image corresponding to the second display data.

When the first display area 601 and the second display area 602 are two non-overlapping display areas, the first display data of the first type of information and the second display data of the second type of information will be displayed in the first display area 601 and the second display area 602 of the first display screen 610, respectively.

When the first display area 601 and the second display area 602 are two overlapping display areas, and the first display data and the second display data simultaneously contain data that needs to be displayed, since the hierarchical setting of the second data channel 402 is higher than that of the first data channel 401, when the first graphics synthesis module 501 performs display image synthesis, the image corresponding to the second display data will be located above the image corresponding to the first display data.

Therefore, when the first display screen 610 displays, the overlapping area between the first display area 601 and the second display area 602 will only display the image corresponding to the second display data of the second type of information of the second display area 602, and the other non-overlapping display area of the first display area 601 will display the first display data of the first type of information.

The sizes and positions of the first display area 601 and the second display area 602 can be set by those skilled in the art according to the actual situation.

The second graphics synthesis module 502 synthesizes the third display data and the fourth display data into the display data of the second display screen 620 based on the hierarchical settings of the third data channel 403 and the fourth data channel 404.

The second display screen 620 is divided into a third display area 603 and a fourth display area 604, which are typically designed as two overlapping display areas. The third display area 603 displays the image corresponding to the third display data, and the fourth display area 604 displays the image corresponding to the fourth display data.

When the third display data and the fourth display data simultaneously contain data that needs to be displayed, since the hierarchical setting of the fourth data channel 404 is higher than that of the third data channel 403, when the second graphics synthesis module 502 performs display image synthesis, the image corresponding to the fourth display data will be located above the image corresponding to the third display data. Therefore, when the second screen 620 displays, only the fourth display data of the second type of information of the fourth display area 604 will be displayed.

When the second operating system 200 has an abnormality and is unable to draw and generate the correct fourth display data, correspondingly, the second graphics synthesis module 502 cannot obtain the correct fourth display data through the fourth data channel 404. The display data synthesized by the second graphics synthesis module 502 only includes the third display data. At this point, the second display screen 620 will display the image corresponding to the third display data.

The sizes and positions of the third display area 603 and the fourth display area 604 can be set by those skilled in the art according to the actual situation.

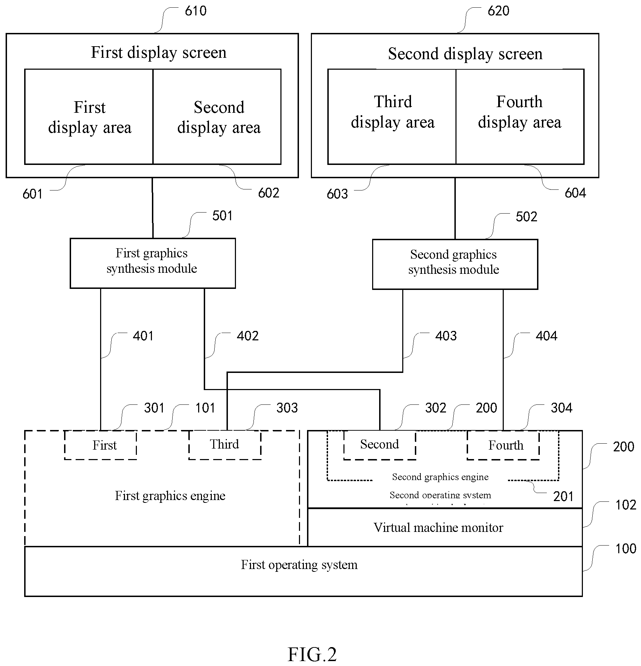

Preferably, the deployment scheme of the first operating system 100 and the second operating system 200 is shown in FIG. 2, which is a schematic diagram of the deployment scheme of the first operating system and the second operating system in the embodiment of the present application.

The first operating system 100, as the host operating system (Host OS), is deployed directly on the hardware platform, a virtual machine monitor 102 is deployed on the first operating system 100, and the second operating system 200 (Guest OS) is deployed on the virtual machine monitor 102.

As an example, the first operating system 100 can be the QNX operating system, the virtual machine monitor 102 can be the Hypervisor, and the second operating system 200 can be the Android operating system.

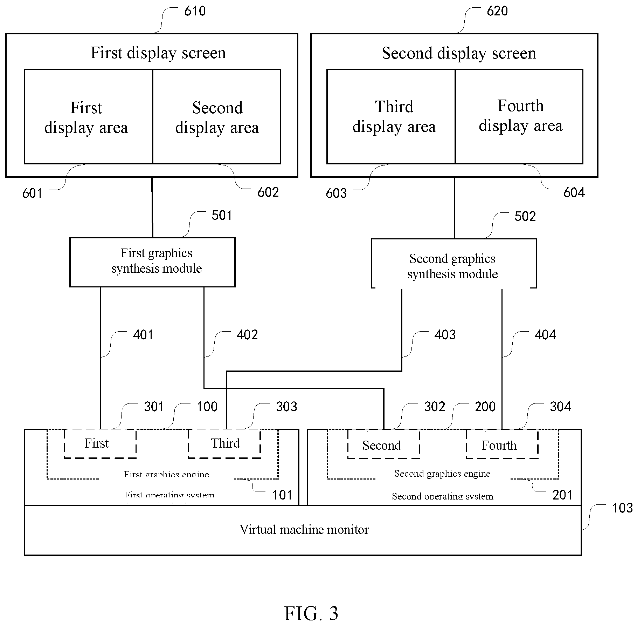

In another embodiment, in another deployment scheme of the first operating system and the second operating system shown in FIG. 3, a virtual machine monitor 103 is directly deployed on the hardware platform, and both the first operating system 100 (Guest OS) and the second operating system 200 (Guest OS) are deployed on the virtual machine monitor 103.

As an example, the virtual machine monitor 103 can be the QNX Hypervisor, the first operating system 100 can be the QNX operating system, and the second operating system 200 can be the Android operating system.

In other embodiments, users may select other real-time operating systems such as VxWorks and RT-Linux as the first operating system based on system security level, hardware platform, customer requirements, user development habits, etc. Similarly, users may select operating systems such as Harmony OS, Linux and MacOS as the second operating system. Generally, the security of the first operating system is higher than that of the second operating system. Correspondingly, a suitable virtual machine monitor such as Lguest and KVM is selected based on the first operating system and the second operating system. Without departing from the principles of the present application, all these technical solutions after modification or replacement will fall within the scope of protection of the present application.

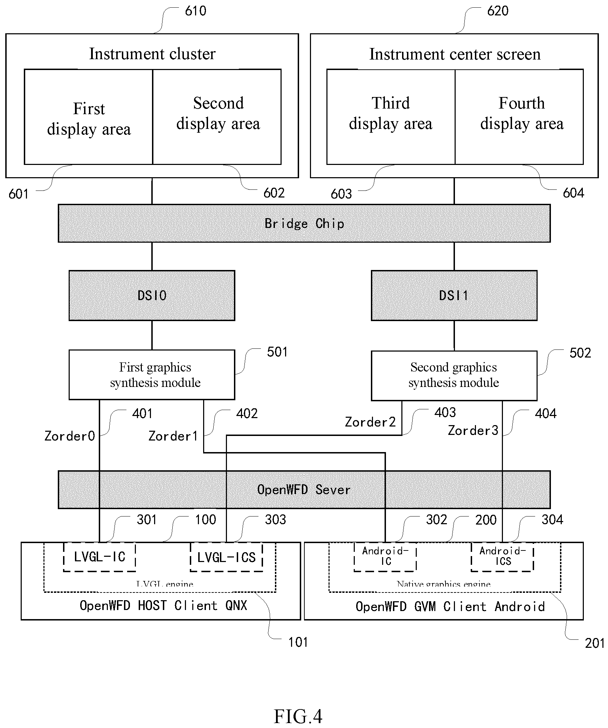

Next, reference is made to FIG. 4, which is a schematic diagram of the architecture of the multi-screen display system for an intelligent cabin in the embodiment of the present application.

The intelligent cabin usually needs to display two types of information. The first type of information is basic driving information, which specifically includes speed, gear, driving mode, indicator light, alarm information, battery level, range, etc. The second type of information is in-vehicle entertainment information, which specifically includes media, navigation, etc.

The first type of information is mainly displayed through the first display screen, i.e., instrument cluster (IC) 610. The second type of information is mainly displayed through the second display screen, i.e., instrument center screen (ICS) 620.

At the same time of displaying the first type of information, the instrument cluster 610 can also display the second type of information as needed. Preferably, in order to ensure that the basic driving information and the in-vehicle entertainment information do not interfere with each other, the first display area 601 for displaying the first type of information and the second display area 602 for displaying the second type of information are set as two non-overlapping display areas.

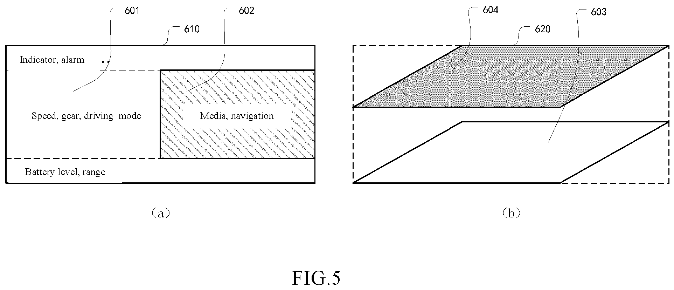

As shown in FIG. 5(a), which is a schematic diagram of the division of display areas of the instrument cluster, the first display area 601 is configured to display the first type of information such as speed, gear, driving mode, indicator light, alarm information, battery level, and range. The second display area 602 is configured to display the second type of information such as media and navigation.

As to the instrument center screen 620, when the multi-screen display system is running normally, the instrument center screen 620 usually only displays the second type of information; and when the second operating system has an abnormality, the first operating system can control the instrument center screen 620 to display a keep alive page.

Correspondingly, the third display area 603 and the fourth display area 604 are typically designed as two overlapping display areas as shown in FIG. 5(b), and the fourth display area 604 for displaying the second type of information can completely cover the third display area 603 for displaying the first type of information.

Preferably, the first operating system 100 adopts the QNX operating system. The QNX operating system is a real-time operating system with a microkernel that complies with the ISO26262 ASII,-D specification. It has the advantages of being safe and stable, and having high real-time performance, which can simultaneously meet the functionality security requirements and data security requirements of vehicle digital instrument panel.

The second operating system 200 adopts the Android operating system, which focuses more on user experience and has rich application programs.

The QNX operating system is deployed on the hardware platform SoC chip SA8155 as the Host OS. The virtual machine monitor, i.e., the Hypervisor, is deployed on the QNX operating system, and the Android operating system is deployed as the Guest OS based on the Hypervisor.

Since the QNX operating system is usually only responsible for drawing the basic driving information, when rendering the basic driving information, it often focuses on the real-time performance and security of the rendering, rather than the richness of the rendering effect, and it is not required to draw on the entire instrument cluster 610. Therefore, the QNX operating system does not need to be configured with a powerful graphics engine.

Preferably, an open-source and lightweight graphics engine, LVGL engine, is selected as the first graphics engine 101 and deployed on the QNX operating system. This not only reduces software resource overhead and costs, but also lightens the running load of the QNX real-time operating system, achieving the goal of security and high efficiency.

In addition to being responsible for the drawing of in-vehicle entertainment information on the instrument center screen 620, the Android operating system is also responsible for the drawing of in-vehicle entertainment information on the instrument cluster 610. The second graphics engine 102 has to support rich display effects and 3D model rendering. Therefore, the native UI engine of the Android operating system is selected as the second graphics engine 102.

It should be noted that according to the actual situation, lightweight graphics engines such as MicroGFX, Embedded Wizard and EmWin can also be selected as the first graphics engine 101, and powerful graphics engines such as Unity engine and Unreal engine can also be selected as the second graphics engine 102. Without departing from the principles of the present application, those skilled in the art may make equivalent modifications or replacements to the first graphics engine, and all the technical solutions after these modifications or replacements will fall within the scope of protection of the present application.

The LVGL-IC (the first graphics drawing process 301) running on the QNX operating system and designed based on the LVGL engine is configured to draw the basic driving information (the first display data) of the first display area 601 of the instrument cluster 610.

As an example, after the basic driving information shown in FIG. 5(a) is deployed on the instrument cluster 610 with a resolution of 1000*300, the measured data of LVGL-IC process is shown in Table 1:

**Table 1: LVGL-IC Resource Occupancy**

| Test item | Rom occupancy | Ram occupancy | CPU occupancy | GPU occupancy |
|---|---|---|---|---|
| Data | 3.8MB | 6.3MB | < 1/800 | < 1/100 |

It can be seen from Table 1 that the system resource overhead of LVGL-IC process is very low.

The LVGL-ICS (the third graphics drawing process 303) running on the QNX operating system and designed based on the LVGL engine is configured to draw the keep live page (the third display data) of the third display area 603 of the instrument center screen 620.

The Android-IC (the second graphics drawing process 302) running on the Android operating system and designed based on the native UI engine of the Android operating system is configured to draw the in-vehicle entertainment information (the second display data) of the second display area 602 of the instrument cluster 610.

The Android-ICS (the fourth graphics drawing process 304) running on the Android operating system and designed based on the native UI engine of the Android operating system is configured to draw the in-vehicle entertainment information (the fourth display data) of the fourth display area 604 of the instrument center screen 620.

A first hardware pipeline (the first data channel 401) is allocated to transport the first display data to a first layer mixer (the first graphics synthesis module 501), and the level of the first hardware pipeline is set to Zorder0.

A second hardware pipeline (the second data channel 401) is allocated to transport the second display data to the first layer mixer (the first graphics synthesis module 501), and the level of the second hardware pipeline is set to Zorder1.

In the first layer mixer, the first display data and the second display data are synthesized according to the hierarchical settings of their corresponding pipelines for use as the display data of the instrument cluster 610.

The display data of the instrument cluster 610 is transmitted to the instrument cluster 610 through a DSI0 interface and then through a bridge chip so that it can be displayed for the user. The first display area 601 displays the image corresponding to the first display data, and the second display area 602 displays the image corresponding to the second display data.

Through the above display method for the instrument cluster 610, the basic driving information and the in-vehicle entertainment information are isolated across systems, and the two do not interfere with each other. In this way, even if Android crashes, it will not affect the display of the basic driving information, thus further improving the security of the multi-screen display system.

A third hardware pipeline (the third data channel 403) is allocated to transport the third display data to a second layer mixer (the second graphics synthesis module 502), and the level of the third hardware pipeline is set to Zorder2.

A fourth hardware pipeline (the fourth data channel 404) is allocated to transport the fourth display data to the second layer mixer (the second graphics synthesis module 502), and the level of the fourth hardware pipeline is set to Zorder3.

In the second layer mixer, the third display data and the fourth display data are synthesized according to the hierarchical settings of their corresponding pipelines for use as the display data of the instrument center screen 620. The display data of the instrument center screen 620 is transmitted to the instrument center screen 620 through a DSI1 interface and then through a bridge chip so that it can be displayed for the user.

Due to the higher hierarchy of the fourth hardware pipeline than the third hardware pipeline (which is placed at the lower level of the synthesized image to prevent accidental triggering of the keep alive page), when the Android operating system is running normally, it is the fourth display data that will always be displayed to the user, that is, the instrument center screen 620 will display the in-vehicle entertainment information generated by the Android operating system.

Moreover, when the Android operating system is running normally, the LVGL-ICS can be set to not draw the third display data (the keep alive page), thereby reducing the amount of data in the second layer mixer and saving system resources.

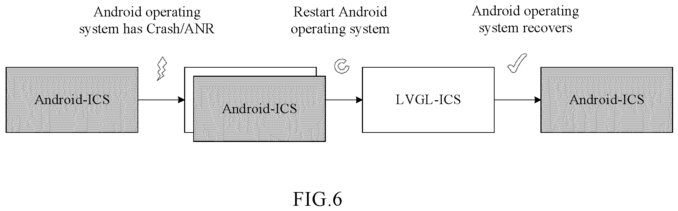

Next, reference is made to FIG. 6, which is a schematic diagram of the keep alive strategy of the instrument center screen in the embodiment of the present application. When the Android operating system is running normally, the instrument center screen 620 will display the in-vehicle entertainment information drawn by Android-ICS.

In order to monitor whether the Android operating system is running normally, the QNX operating system monitors the heartbeat of the core process of the Android operating system in real time. When the heartbeat is abnormal, it indicates that the Android operating system has Crash/ANR. At this point, the information drawn by Android-ICS and displayed on the instrument center screen 620 will no longer be updated. The core process of the Android operating system can be at least one of the SurfaceFlinger process, Init process, and Zygote process.

Preferably, the LVGL-ICS process can be used to monitor the Android operating system's graphics management process, i.e., the SurfaceFlinger process. Specifically, the LVGL-ICS process serves as the server end, and the SurfaceFlinger process serves as the client end, establishing a Socket connection between the LVGL-ICS process and the SurfaceFlinger process. The LVGL-ICS process determines whether the Android operating system is abnormal by comparing the time when the Socket is disconnected with a preset time threshold.

It should be noted that there may be differences in the corresponding core processes of different second operating systems. As an example, when the second operating system is the Linux operating system, since the graphics management process of the Linux operating system is the X Window Server process or Wayland Server process (the names of graphics management processes may vary depending on different versions of the Linux operating system) and the Linux operating system does not have the Zygote process, at this point, the X Window Server process, Wayland Server process, Init process and the like can be selected as the core process of the Linux operating system. Without departing from the principles of the present application, those skilled in the art may make equivalent changes or replacements to the core process, and all the technical solutions after these changes or replacements will fall within the scope of protection of the present application.

When the QNX operating system detects abnormal operation of the Android operating system, the QNX operating system as the host OS can actively restart the Android operating system as the guest OS through the QVM process.

When waiting for the Android operating system to restart, the LVGL-ICS transmits the keep alive page to the second layer mixer through the third pipeline. At this point, since the Android operating system is restarting, the second layer mixer cannot obtain correct data from Android-ICS through the fourth pipeline. Therefore, the display data synthesized by the second layer mixer will only contain the content of the keep alive page. Correspondingly, the instrument center screen 620 displays the keep alive page.

As an example, the keep alive page can prompt the user that the Android operating system is restarting, as well as the remaining time (countdown) for system restart, etc.

After restart of the Android operating system is completed, the instrument center screen 620 will continue to display the content of Android-ICS normally.

Through the above keep alive strategy of the instrument center screen, the black screen phenomenon of the instrument center screen caused by abnormality of the Android operating system can be effectively avoided, thus avoiding the panic and anxiety caused by occasional black screen of the instrument center screen to the user, and thereby further ensuring driving safety and improving the user experience.

It should be noted that the data transmission management scheme for the display data among various operating systems and hardware devices is not limited in the present application. As an example, when the OpenWFD solution shown in FIG. 4 is adopted, the OpenWFD Server runs on the QNX operating system at this point, and is responsible for providing display hardware abstraction for multiple operating systems, thereby avoiding direct access to display hardware from multiple operating systems. At this point, the driving layers of both the QNX operating system and the Android operating system become OpenWFD clients. Those skilled in the art can select appropriate data transmission management schemes based on actual conditions such as the operating systems and hardware platforms.

It should be noted that the specific implementation methods of the data channels and the graphics synthesis modules are also not limited in the present application. As an example, in the embodiment of the present application, the SA8155 chip supports hardware data channels (pipelines) and graphics synthesis modules (layer mixers). Those skilled in the art can also choose to implement them through software programming based on the resource situation of the hardware platform.

It should be noted that the hardware platform for implementing the multi-screen display system of the present application is also not limited in the present application. As an example, those skilled in the art can also select R-Car H3, i.MX8 and other series of chips for use as the hardware platform for the multi-screen display system of the present application.

Further, the present application also provides an intelligent cabin, which includes the multi-screen display system as described in any of the above embodiments.

Further, the present application also provides a vehicle which includes an intelligent cabin, and the intelligent cabin includes the multi-screen display system as described in any of the above embodiments. Optionally, the vehicle is a new energy vehicle.

It should be noted that the terms "first", "second" and other ordinal numerals in the specification and claims of the present application, as well as in the above drawings, are only used to distinguish similar objects and not to describe or indicate a specific order or sequence. It should be understood that the data used in this way can be interchanged in appropriate situations, so that the embodiments of the present application described herein can be implemented in other orders than those illustrated or described herein.

Hitherto, the technical solutions of the present application have been described in connection with the preferred embodiments shown in the accompanying drawings, but it is easily understood by those skilled in the art that the scope of protection of the present application is obviously not limited to these specific embodiments. Without departing from the principles of the present application, those skilled in the art can make equivalent changes or replacements to relevant technical features, and all the technical solutions after these changes or replacements will fall within the scope of protection of the present application.

## Claims

1. A multi-screen display system, comprising:
a first operating system, a second operating system, a first display screen, and a second display screen;
wherein the first operating system is deployed with a first graphics engine and draws a first type of information based on the first graphics engine;
the second operating system is deployed with a second graphics engine and draws a second type of information based on the second graphics engine;
the first display screen comprises a first display area and a second display area, which are two non-overlapping display areas or two overlapping display areas;
the second display screen comprises a third display area and a fourth display area, which are two overlapping display areas;
the first display area and the third display area are configured to display the first type of information;
the second display area and the fourth display area are configured to display the second type of information; and
the first operating system is a real-time operating system, and the security of the first operating system is higher than that of the second operating system.

2. The multi-screen display system according to claim 1, wherein the system further comprises:
a first graphics drawing process, a second graphics drawing process, a third graphics drawing process, and a fourth graphics drawing process;
wherein the first graphics drawing process is configured to run on the first operating system, and draw the first type of information to generate first display data;
the second graphics drawing process is configured to run on the second operating system, and draw the second type of information to generate second display data;
the third graphics drawing process is configured to run on the first operating system, and draw the first type of information to generate third display data;
the fourth graphics drawing process is configured to run on the second operating system, and draw the second type of information to generate fourth display data;
both the first graphics drawing process and the third graphics drawing process are designed based on the first graphics engine, which is a lightweight graphics engine; and
both the second graphics drawing process and the fourth graphics drawing process are designed based on the second graphics engine.

3. The multi-screen display system according to claim 2, wherein the system further comprises:
a first data channel, a second data channel, a third data channel, a fourth data channel, a first graphics synthesis module, and a second graphics synthesis module;
wherein the first data channel is configured to transport the first display data to the first graphics synthesis module;
the second data channel is configured to transport the second display data to the second graphics synthesis module;
the third data channel is configured to transport the third display data to the first graphics synthesis module; and
the fourth data channel is configured to transport the fourth display data to the second graphics synthesis module.

4. The multi-screen display system according to claim 3, wherein:
the first graphics synthesis module is configured to synthesize the first display data and the second display data based on hierarchical settings of the first data channel and the second data channel, as the display data of the first display screen;
wherein the hierarchical setting of the second data channel is higher than that of the first data channel, and an image of the second display area corresponding to the second data channel is located above an image of the first display area corresponding to the first data channel;
the second graphics synthesis module is configured to synthesize the third display data and the fourth display data based on hierarchical settings of the third data channel and the fourth data channel, as the display data of the second display screen; and
the hierarchical setting of the fourth data channel is higher than that of the third data channel, and an image of the fourth display area corresponding to the fourth data channel is located above an image of the third display area corresponding to the third data channel.

5. The multi-screen display system according to any one of claims 1 to 4, wherein the first operating system is further configured to execute the following operations:
monitoring the core process status of the second operating system in real time;
restarting the second operating system by the first operating system when the core process status is abnormal; and
setting the third display data as a keep alive page by the first operating system during the restart process of the second operating system, so that the second display screen displays the keep alive page.

6. The multi-screen display system according to any one of claims 1 to 5, wherein the first operating system is deployed with a virtual machine controller, and the second operating system is deployed based on the virtual machine controller.

7. The multi-screen display system according to claim 6, wherein the first operating system is the QNX operating system, the virtual machine controller is the Hypervisor, and the second operating system is the Android operating system.

8. The multi-screen display system according to claim 6 or 7, wherein the first graphics engine is the LVGL engine.

9. An intelligent cabin, comprising the multi-screen display system according to any one of claims 1 to 8.

10. A vehicle, comprising the intelligent cabin according to claim 9.
